# EUROPÄISCHE PATENTSCHRIFT

(11) **EP 3 191 321 B1**
(45) Veröffentlichungstag und Bekanntmachung des Hinweises auf die Patenterteilung: **03.10.2018**
(21) Anmeldenummer: 15757301.5
(22) Anmeldetag: 07.09.2015
(51) Int. Cl.: B60G 7/00, B60B 35/00, B60B 35/08, B60B 35/02, B60G 9/02, B60G 3/14

(54) **ACHSEINHEIT**
AXLE UNIT
UNITÉ D'ESSIEU

(30) Priorität: 12.09.2014 DE 102014218317
(43) Veröffentlichungstag der Anmeldung: 19.07.2017
(73) Patentinhaber: SAF-HOLLAND GmbH, 63856 Bessenbach-Keilberg (DE)
(72) Erfinder: JANSEN, Roger, Holton, Michigan 49425 (US); GALAZIN, Gregory, Muskegon, Michigan 49445 (US)
(74) Vertreter: Müller Schupfner & Partner Patent- und Rechtsanwaltspartnerschaft mbB
(86) Internationale Anmeldenummer: PCT/EP2015/070336
(87) Internationale Veröffentlichungsnummer: WO 2016/037961

(56) Entgegenhaltungen:
- DE-A1-102006 009 441
- DE-T2- 60 101 803
- US-A- 6 039 336

## Beschreibung

Die vorliegende Erfindung betrifft eine Achseinheit insbesondere zum Einsatz in Nutzfahrzeugen.

Achseinheiten sind aus dem Stand der Technik insofern bekannt, dass ein Achsrohr, welches oft eine starre Achse ist, über eine Lenkeranordnung gefedert bzw. gedämpft am Rahmen des Nutzfahrzeuges gelagert bzw. festgelegt ist, wobei am Achsrohr wiederum ein oder eine Vielzahl von Fahrzeugrädern drehbar gelagert ist. Der Verbindungsbereich zwischen Achsrohr und dem Längslenker ist dabei ein besonders hoch belasteter und insbesondere auf periodische Lastwechsel belasteter Abschnitt der Fahrwerksaufhängung des Nutzfahrzeuges und es hat in der Vergangenheit viele Versuche gegeben, den Verbindungsbereich zwischen Längslenker und Achsrohr an diese hohen Belastungen anzupassen. Dabei wurden aus dem Stand der Technik viele Achseinheiten bekannt, bei welchen eine Überdimensionierung und somit ein sehr hohes Gewicht der Achseinheit als Konsequenz der Auslegung mit höherer Sicherheit gegen Ermüdungsbrüche oder ähnliche Schädigungen des Verbindungsbereiches zwischen Achseinheit und Lenkereinheit in Kauf genommen werden muss. Es besteht somit ein Verbesserungsbedarf im Bereich der Verbindung zwischen dem Längslenker und dem Achsrohr einer Nutzfahrzeugradaufhängung, um insbesondere das Gewicht der Achseinheit zu reduzieren und gleichzeitig ausreichende Festigkeitswerte und eine einfache Herstellung zu ermöglichen.

Die DE 601 01 803 T2 offenbart einen Fahrzeugaufhängungslenker, der aus einer Vielzahl von miteinander verschweißten Blechteilen zusammengesetzt ist.

Die US-6,039,336 A1 offenbart einen Achslenker, welcher entlang kreisabschnittsförmiger Schweißnähte an einem Achsrohr festgeschweißt ist.

Die DE 10 2006 009 441 A1 betrifft eine Aufhängungseinheit für ein Fahrzeug, umfassend einen Längslenker mit einem Aufhängungsabschnitt, einem Abstützabschnitt sowie einem Achsaufnahmeabschnitt.

Aufgabe der vorliegenden Erfindung ist die Bereitstellung einer Achseinheit, welche einfach hergestellt werden kann und dabei besonders hohe Festigkeitswerte des Verbindungsbereiches zwischen einem Achsrohr und einem Lenkerelement erreicht und dabei auch ein geringes Bauteilgewicht aufweist.

Diese Aufgabe wird gelöst mit einer Achseinheit gemäß Anspruch 1. Weitere Vorteile und Merkmale der vorliegenden Erfindung ergeben sich aus den abhängigen Ansprüchen.

Erfindungsgemäß umfasst die Achseinheit ein Achsrohr und ein Lenkerelement, wobei das Achsrohr sich im Wesentlichen längs einer Rohrachse erstreckt, wobei das Lenkerelement einen Fügeabschnitt mit einem ersten Schweißabschnitt und einem zweiten Schweißabschnitt aufweist, wobei das Lenkerelement mit seinem Fügeabschnitt an das Achsrohr angrenzend und im Wesentlichen quer zur Rohrachse angeordnet ist, wobei im ersten Schweißabschnitt und im zweiten Schweißabschnitt eine Schweißverbindung zwischen dem Lenkerelement und dem Achsrohr herstellbar ist. Das Achsrohr ist vorzugsweise ein länglicher, sich im Wesentlichen liniensymmetrisch, wie beispielsweise mit einem polygonalen Querschnitt, oder rotationssymmetrisch um eine Rohrachse erstreckender Körper. Vorzugsweise ist das Achsrohr hohlkörperförmig ausgebildet. Das Lenkerelement ist vorzugsweise der Längslenker einer Fahrwerksaufhängung eines Nutzfahrzeuges oder ein Teil eines solchen Lenkers. Das Lenkerelement ist im Wesentlichen quer zur Haupterstreckungsrichtung, also zur Rohrachse bezogen auf das Achsrohr ausgerichtet. Das Lenkerelement weist einen Fügeabschnitt auf, welcher mit einer entsprechend vorzugsweise korrespondierenden Außengeometrie des Achsrohres in stoffschlüssigen Eingriff bringbar ist. Hierzu weist der Fügeabschnitt einen ersten Schweißabschnitt und einen zweiten Schweißabschnitt auf, wobei im ersten Schweißabschnitt und im zweiten Schweißabschnitt jeweils eine Schweißverbindung zwischen dem Lenkerelement und dem Achsrohr herstellbar ist, vorzugsweise hergestellt ist. Im Rahmen der vorliegenden Erfindung hat es sich als vorteilhaft herausgestellt, am Fügeabschnitt des Lenkerelements zwei im Wesentlichen voneinander räumlich getrennte Schweißabschnitte, d.h. erster und zweiter Schweißabschnitt, und somit zwei voneinander getrennte Schweißnahtbereiche vorzusehen, an welchen das Lenkerelement an dem Achsrohr festlegbar ist, oder vorzugsweise festgelegt ist. Durch die räumliche Trennung der beiden Schweißabschnitte lässt sich insbesondere eine Spannungskonzentration im Bereich der Seitennähte bei Belastung der Verbindung zwischen Lenkerelement und Achsrohr vermeiden und es können somit eine höhere Lebensdauer und auch höhere Maximalkräfte erreicht werden, welche vom Lenkerelement auf das Achsrohr und umgekehrt übertragen werden können. Gleichzeitig ist es mit der vorliegenden Erfindung möglich, den Verlauf oder mit anderen Worten die Geometrie des ersten und des zweiten Schweißabschnittes derart zu optimieren, dass diese an einen optimalen Kraftfluss zwischen Lenkerelement und Achsrohr angepasst werden. So können insbesondere gerundete Seitennahtgeometrien vorgesehen sein, bei welchen der Effekt der Materialverhärtung im Bereich einer Seitennaht ausgenutzt werden kann, um die Festigkeit der Verbindung zwischen Lenkerelement und Fügeabschnitt zu steigern und gleichzeitig die Gefahr eines Sprödbruches zu vermeiden.

Bevorzugt weist das Lenkerelement einen Armabschnitt und einen Tragabschnitt auf, wobei der Armabschnitt und der Tragabschnitt an im Wesentlichen gegenüberliegenden Seiten des Fügeabschnitts an den Fügeabschnitt grenzen. Neben dem Fügeabschnitt weist das Lenkerelement vorzugsweise einen Armabschnitt auf, wobei der Armabschnitt an einem ersten distalen Ende schwenkbar am Lagerbock eines Nutzfahrzeugfahrwerkes mit dem Rahmen verbunden ist und an seinem zweiten Ende an den Fügeabschnitt grenzt. Weiterhin ist ein Tragabschnitt vorgesehen, welcher vorzugsweise einen Aufnahmebereich zur Festlegung einer Luftfeder aufweist. Vorzugsweise kann das Lenkerelement dabei aus einzelnen Modulen aufgebaut sein, wodurch eine Verwendung ein und derselben Baugruppen des Lenkerelements für verschiedene Nutzfahrzeugfahrwerke möglich ist. Besonders bevorzugt ist der Armabschnitt einstückig mit dem Fügeabschnitt ausgeführt, wobei der Tragabschnitt als separates Bauteil am Fügeabschnitt und/oder am Achsrohr festlegbar ist und einen entsprechenden Fügebereich aufweist. Der Tragabschnitt wird dabei vorzugsweise nach dem Zusammenfügen des Armabschnitts und des Achsrohres am Fügeabschnitt und/oder am Achsrohr festgelegt.

Besonders bevorzugt weist der erste Schweißabschnitt zwei sich zumindest bereichsweise quer zu einer Lenkerachse erstreckende Seitennähte auf, wobei der Schweißabschnitt zumindest eine sich im Wesentlichen parallel zur Lenkerachse erstreckende Quernaht aufweist. Die Lenkerachse ist dabei vorzugsweise eine Achse, entlang derer oder parallel zu der sich die Querschnittskonfiguration des Fügeabschnitts nicht oder nur unwesentlich ändert. Besonders bevorzugt ist die Lenkerachse parallel oder kollinear zur Rohrachse ausgerichtet, wobei der Fügeabschnitt vorzugsweise derart ausgebildet ist, dass er eine zum Achsrohr korrespondierende Geometrie aufweist. Der erste Schweißabschnitt weist vorzugsweise zwei Seitennähte auf, die sich zumindest bereichsweise, besonders bevorzugt aber im Wesentlichen quer zu der Lenkerachse erstrecken und somit vorzugsweise rechts und links des Lenkerelements angeordnet sind und mit dem Achsrohr in eine Schweißverbindung stehen. Die Quernaht ist dabei vorzugsweise ein Abschnitt der Schweißnaht im Bereich des ersten Schweißabschnitts, welche sich im Wesentlichen parallel zur Lenkerachse erstreckt. Im Wesentlichen parallel bedeutet im vorliegenden Fall, dass geringe Abweichungen aufgrund von Fertigungstoleranzen und Materialunebenheiten, welche insbesondere bei der Aufbringung einer Schweißverbindung entstehen, im Rahmen der vorliegenden Erfindung zulässig sind. Besonders bevorzugt ist der Übergangsbereich zwischen den Seitennähten und der Quernaht gerundet ausgeführt, wobei die Grenze zwischen Seitennaht und Quernaht vorzugsweise jeweils auf der Mitte des gerundeten Abschnitts definiert ist. Das heißt mit anderen Worten, dass eine Hälfte des gerundeten Abschnitts der Seitennaht zugerechnet wird und die jeweils andere Hälfte des gerundeten Abschnitts der Quernaht. Insbesondere bevorzugt umfasst der erste Schweißabschnitt zwei Seitennähte und zwei Quernähte und somit eine im Wesentlichen durchgehende Schweißnaht. Die Schweißnaht kann dabei als durchgehende Schweißnaht oder vorzugsweise auch als Aneinanderreihung einzelner Schweißpunkte ausgebildet sein. Die Verwendung von Schweißpunkten eignet sich insbesondere für automatisierte Schweißverfahren. Bei einer bevorzugten Ausführungsform, bei welcher die Seitennähte sich im Wesentlichen quer zur Lenkerachse erstrecken, ist dieses Merkmal dadurch definiert, dass die Erstreckung, das heißt die Ausdehnung der Seitennaht längs oder parallel der Lenkerachse vorzugsweise weniger als ein Viertel der Erstreckung der Seitennaht quer oder vorzugsweise senkrecht zur Lenkerachse beträgt.

Besonders bevorzugt ist im montierten Zustand der Achseinheit die Lenkerachse kollinear zur Rohrachse. Mit anderen Worten bedeutet dies, dass im montierten Zustand der Achseinheit vorzugsweise dann, wenn das Lenkerelement an dem Achsrohr mittels Schweißen festgelegt wurde, die entsprechenden Geometriedefinitionen, welche auf die Lenkerachse des Lenkerelements bezogen sind, auch in Bezug auf die Rohrachse gültig sind. Vorzugsweise liegt das Lenkerelement an dem Achsrohr zumindest in den Bereichen der Seitennähte und der Quernaht sowie im Bereich des zweiten Schweißabschnitts möglichst vollflächig an. Mit anderen Worten korrespondiert dabei der Fügeabschnitt mit seiner Innengeometrie bzw. mit seiner als Kontaktfläche zum Achsrohr vorgesehenen Geometrie mit der Außenfläche des Achsrohres in dessen entsprechendem Befestigungsbereich, an welchem das Lenkerelement festgelegt ist.

In einer besonders bevorzugten Ausführungsform weisen die Seitennähte jeweils eine Seitennahtlänge auf, die in einem Verhältnis von 0,2 bis 0,7, vorzugsweise 0,25 bis 0,6 und besonders bevorzugt von ca. 0,45 bis 0,5 zum Umfang des Achsrohres im Bereich des Fügeabschnitts steht. Als Umfang des Achsrohres im Bereich des Fügeabschnitts wird dabei vorzugsweise der mittlere Umfang bzw. der Mittelwert verschiedener Umfangswerte, der Außenfläche des Achsrohres über einem Bereich, in dem das Achsrohr mit dem Lenkerelement in Verbindung steht, definiert. Es versteht sich, dass der Umfang des Achsrohres bzw. der mittlere Umfang des Achsrohres sowohl bei polygonalen Außengeometrien als auch bei einer zylinderförmigen Außengeometrie des Achsrohres jeweils senkrecht zur Rohrachse gemessen wird. Als Seitennahtlänge wird dabei vorzugsweise der absolute Längenbetrag der Seitennaht im Bereich der Seitennähte definiert. Dabei kann die Seitennaht vorzugsweise gewellt ausgebildet sein oder eine sonstige, von einer einfach gekrümmten Form abweichende Geometrie aufweisen. Das Verhältnis der Seitennahtlänge zum Umfang des Achsrohres ist mit anderen Worten ein Ausdruck für die Länge, entlang derer das Lenkerelement mit dem Achsrohr verschweißt ist in Relation zur Stärke des Achsrohres. Vorzugsweise werden dabei die eventuell vorgesehenen gerundeten Abschnitte zwischen der Seitennaht und einer Quernaht hälftig der Seitennaht zugerechnet. Das Verhältnis von 0,2 bis 0,7 erlaubt dabei an seiner Untergrenze von 0,2 gerade noch eine ausreichende Seitennahtlänge zwischen Lenkerelement und Achsrohr und erlaubt auf der anderen Seite im Bereich seines Maximalwertes von 0,7 eine beispielsweise mäandernde Form der Seitennaht, wodurch sich die Seitennahtlänge gegenüber dem Umfang des Achsrohres deutlich erhöht und insbesondere die Kraftübertragung bzw. Biegemomentübertragung zwischen Achsrohr und Lenkerelement auf niedrigere Materialspannungen hin optimiert werden kann. Im bevorzugten Bereich von 0,25 bis 0,6 hat es sich gezeigt, dass insbesondere bei Achseinheiten zum Einsatz in normalen Zugfahrzeugen und deren Anhängern wie beispielsweise ein 40-Tonner-Gespann, das Verhältnis von Seitennahtlänge zu Umfang des Achsrohres noch ausreichenden Spielraum für eine leicht wellenförmige Geometrie der Seitennaht gibt und auf der anderen Seite die Seitennahtlänge noch groß genug ist, um eine ausreichende Festigkeit auch für höher belastete Nutzfahrzeugfahrwerke bereitzustellen. Das besonders bevorzugte Verhältnis von 0,45 bis 0,5 hat sich dabei insbesondere für den Einsatz in hoch belasteten Nutzfahrzeugen bewährt, da vorzugsweise im Wesentlichen die Hälfte des Umfanges des Achsrohres in Verbindung mit dem Lenkerelement gebracht wird, wodurch ausreichend hohe Festigkeiten für die Übertragung der auftretenden Kräfte und Biegemomente sowie der am Achsrohr mitunter bei Bremsvorgängen auftretenden Torsionsmomente auch für die hoch belasteten Fahrwerksysteme von schweren Nutzfahrzeugen zur Verfügung stehen.

In einer besonders bevorzugten Ausführungsform erstrecken sich die Seitennähte oder der erste Schweißabschnitt jeweils über einen Bogenwinkel bezogen auf die Lenkerachse, wobei der Bogenwinkel 120° bis 195°, vorzugsweise 140° bis 185° und besonders bevorzugt ca. 170° bis 180° beträgt. Neben dem Verhältnis der Seitennahtlänge zum Umfang des Achsrohrs ist auch die Erstreckung der Seitennähte oder des ersten Schweißabschnitts über einen Bogenwinkel bezogen auf die Lenkerachse bzw. die vorzugsweise zur Lenkerachse kollinear ausgerichtete Rohrachse, ein Ausdruck für die Umfassung des Achsrohres durch den Fügeabschnitt des Lenkerelements. Es ist dabei besonders bevorzugt, dass das Lenkerelement das Achsrohr derart umfasst, dass es seitlich, also quer zur Rohrachse an das Achsrohr herangeführt werden kann und schließlich mit dem Achsrohr verbunden werden kann. Der Minimalwert des Bogenwinkels von 120° wird dabei im Rahmen der vorliegenden Erfindung vorzugsweise nicht unterschritten, um eine ausreichende Befestigungslänge zur Verschweißung des Lenkerelements mit dem Achsrohr bereitzustellen. Der Maximalwert des Bogenwinkels von 195° erlaubt unter leichter Aufbiegung des Fügeabschnitts, das Achsrohr dennoch quer zur Lenkerachse in den Fügeabschnitt einsetzen zu können und anschließend verschweißen zu können. Es versteht sich, dass ohne Krafteinsatz das Achsrohr nur längs der Lenkerachse in den Fügeabschnitt eingefügt werden könnte. Der besonders bevorzugte Bereich von 140° bis 185° erlaubt zum einen eine hohe Festigkeit der Verbindung zwischen Lenkerelement und Achsrohr und zum anderen unter Aufbringung einer leichten Biegekraft und somit einem leichten Aufweiten des Fügeabschnitts, das Achsrohr seitlich bzw. quer zur Lenkerachse in den Fügeabschnitt einsetzen zu können. Der besonders bevorzugte Bereich von 170° bis 180° des Bogenwinkels erlaubt zum einen eine besonders hohe Festigkeit der Verbindung zwischen Achsrohr und Lenkerelement aufgrund der optimierten Länge der Seitennähte und zum anderen ein Zusammenfügen des Lenkerelements und des Achsrohres im Bereich des Fügeabschnitts ohne die Notwendigkeit von Montagekräften.

Besonders bevorzugt übersteigt der Bogenwinkel den Wert von 180° nicht. Bei dieser bevorzugten Ausführungsform kann das Lenkerelement ohne Krafteinsatz auf die Achse aufgesetzt werden. Auf diese Weise lassen sich Kosten bei der Fertigung einer Achseinheit reduzieren, da keinerlei Zusatzgerät außer einem Schweißgerät notwendig ist.

Vorzugsweise gehen die Seitennähte und die Quernaht in gerundeten Schweißnahtabschnitten ineinander über. Besonders bevorzugt ist der Übergangsbereich zwischen den Seitennähten und der Quernaht gerundet ausgeführt, wobei die Grenze zwischen Seitennaht und Quernaht vorzugsweise jeweils auf der Mitte des gerundeten Abschnitts definiert ist. Das heißt mit anderen Worten, dass eine Hälfte des gerundeten Abschnitts der Seitennaht zugerechnet wird und die jeweils andere Hälfte des gerundeten Abschnitts der Quernaht. Insbesondere bevorzugt umfasst der erste Schweißabschnitt zwei Seitennähte und zwei Quernähte und somit eine im Wesentlichen durchgehende Schweißnaht.

In einer besonders bevorzugten Ausführungsform ergibt die Summe der Längen der Seitennähte und der Quernähte eine Fügelänge des ersten Schweißabschnitts, wobei die Fügelänge in einem Verhältnis von 1 bis 2,5, vorzugsweise von 1,25 bis 2 und besonders bevorzugt von ca. 1,5 zum Umfang des Achsrohres im Bereich des Fügeabschnitts steht. Mit anderen Worten ist die Fügelänge somit die Länge der gesamten Schweißnaht, welche im ersten Schweißabschnitt zwischen dem Lenkerelement und dem Achsrohr hergestellt ist. Bevorzugt ist die Fügelänge dabei mindestens so groß wie der Umfang des Achsrohrs im Bereich von dessen Verbindung mit dem Lenkerelement. Der bevorzugte Bereich von 1 bis 2,5 der Fügelänge zum Umfang gestattet dabei die Ausbildung einer besonders festen Verbindung zwischen dem Lenkerelement und dem Achsrohr, wobei jedoch aufgrund der größeren Breite des Lenkerelements ein höheres Gewicht in Kauf genommen werden muss. Mit dem besonders bevorzugten Verhältnis von 1,25 bis 2 lassen sich für alle gängigen Nutzfahrzeugfahrwerke die ausreichenden Festigkeitswerte erreichen, wobei mit einem Maximalwert des Verhältnisses von 2 das Gewicht der Achseinheit im Wesentlichen geringer gehalten werden kann als bei der Ausführung mit einem Verhältnis von 2,5. Der besonders bevorzugte Bereich des Verhältnisses von 1,5 hat im Rahmen der vorliegenden Erfindung eine besonders hohe Festigkeit der Verbindung zwischen Lenkerelement und Achsrohr bei einem vergleichsweise sehr niedrigen Gewicht im Vergleich zu allen anderen getesteten Varianten der Achseinheit erbracht.

Erfindungsgemäß ist der zweite Schweißabschnitt als Aussparung an dem Lenkerelement ausgebildet, wobei der zweite Schweißabschnitt eine umlaufende Kante aufweist, an der eine Schweißnaht herstellbar ist. Der zweite Schweißabschnitt ist somit vorzugsweise als augenförmige Aussparung an dem Lenkerelement vorgesehen und ist vorzugsweise mittig zwischen den oberen Bereichen der Seitennähte des ersten Schweißabschnittes angeordnet. Als obere Seite ist vorzugsweise die Seite des Fügeabschnitts definiert, welche dem Bogenwinkel des ersten Schweißabschnitts gegenüber liegt. Über den zweiten Schweißabschnitt ist es möglich, zusätzlich zum ersten Schweißabschnitt eine weitere Seitennaht zwischen dem Lenkerelement und dem Achsrohr herzustellen, wodurch insgesamt die Kraftverteilung zwischen Achsrohr und Lenkerelement verbessert wird. Vorzugsweise weist die umlaufende Kante des zweiten Schweißabschnittes eine Anfasung auf, welche die Herstellung einer Seitennaht erleichtert und somit die Fertigung der Achseinheit beschleunigt und deren Kosten senkt.

Besonders bevorzugt weist die umlaufende Kante eine Kantenlänge auf, welche in einem Verhältnis von 0,4 bis 1,3, vorzugsweise 0,6 bis 1 und besonders bevorzugt von ca. 0,85 bis 0,95 zum Umfang des Achsrohres im Bereich des Fügeabschnittes steht. Ähnlich zu den Ausführungen bezüglich des ersten Schweißabschnitts ist auch die umlaufende Kante des zweiten Schweißabschnittes und deren Kantenlänge eine Möglichkeit, die tatsächlich Verbindlungslänge, das heißt mit anderen Worten die Länge, entlang derer eine Schweißnaht zwischen dem Achsrohr und dem Lenkerelement hergestellt ist, zu beeinflussen. Es hat sich dabei gezeigt, dass im Rahmen eines Verhältnisses von 0,4 bis 1,3 ein günstiger Kompromiss zwischen einer verbleibenden Restwandstärke der Lenkereinheit außerhalb des zweiten Schweißabschnittes und einer andererseits ausreichend hohen Verbindungslänge bzw. Schweißkantenlänge zwischen Lenkerelement und Achsrohr gegeben ist. Das bevorzugte Verhältnis von 0,6 bis 1 erlaubt dabei, dass bei einer bevorzugten leicht elliptischen Ausbildung des zweiten Schweißabschnittes eine Kantenlänge der umlaufenden Kante erreicht wird, die im Wesentlichen größer als oder gleich dem Umfang des Achsrohres ist, wodurch bei Auslegung der Achseinheit vorzugsweise lediglich eine Skalierung vorgenommen werden muss und stets das entsprechend vorteilhafte Verhältnis zwischen der Kantenlänge des zweiten Schweißabschnitts und der Dicke bzw. dem Umfang des Achsrohres gewählt werden kann.

Ferner bevorzugt ist der zweite Schweißabschnitt derart am Lenkerelement vorgesehen, dass angrenzend an den zweiten Schweißabschnitt und einander gegenüberliegend zwei Lenkerstege gebildet sind, wobei die Lenkerstege eine minimale Stegbreite aufweisen, wobei der zweite Schweißabschnitt kollinear zu den minimalen Stegbreiten eine Ausschnittserstreckung aufweist, wobei die Summe der minimalen Stegbreiten zu der Ausschnittserstreckung in einem Verhältnis von 0,1 bis 1, vorzugsweise 0,2 bis 0,8 und besonders bevorzugt von ca. 0,3 bis 0,4 steht. Die an den zweiten Schweißabschnitt angrenzenden Stegbereiche weisen vorzugsweise eine größere Erstreckung quer zur Lenkerachse, oder zur Rohrachse auf als ihre Stegbreite. Hierdurch stellen die Stegabschnitte eine bevorzugte Materialverstärkung des Lenkerelements im Bereich des zweiten Schweißabschnitts dar, welche die durch die Aussparung des zweiten Schweißabschnitts verursachte Materialschwächung ausgleicht. Um einen guten Kompromiss zwischen ausreichender Materialstärke des Lenkerelements und einer gleichzeitig ausreichenden Kantenlänge entlang derer der zweite Schweißabschnitt an dem Achsrohr festlegbar ist, zu erreichen, ist es bevorzugt das die Ausschnittserstreckung in einem bestimmten Verhältnis zur Erstreckung der Stegbreite steht. Vorzugsweise weisen die Lenkerstege eine Stegbreite auf, deren Minimalwert kleiner ist als die Erstreckung des zweiten Schweißabschnitts längs bzw. parallel der Lenkachse oder der Rohrachse. Der bevorzugte Verhältnisbereich von 0,1-1 der Summe der minimalen Stegbreiten zur Ausschnittserstreckung sorgt dabei für einen besonders guten Kompromiss zwischen einer ausreichenden Kantenlänge zur Schweißung des Lenkerelements an das Achsrohr und einer weiterhin ausreichenden Festigkeit des Lenkerelements gegen Verbiegung. Es kann auf diese Weise ein besonders guter Kompromiss zwischen der Festigkeit der Schweißverbindung zwischen Lenkerelement und Achsrohr und der Festigkeit des Lenkerelements selbst gefunden werden. Der besonders bevorzugte Bereich von 0,2-0,8 hat sich dabei insbesondere für Achssysteme bewährt, in welchen eine besonders kompakte Bauweise der Lenkerelement-Achsrohr-Verbindung erforderlich ist. Der insbesondere bevorzugte Verhältnisbereich von 0,3-0,4 erreichte nach Versuchen der Anmelderin die besten Werte für die Festigkeit des Lenkerelements zum einen und die Festigkeit der Schweißverbindung zwischen Lenkerelement und Achsrohr zum anderen.

Bevorzugt ist das Lenkerelement als einstückiges Gussteil ausgebildet. Bei dieser bevorzugten Ausführungsform sind sowohl der Armabschnitt als auch der Fügeabschnitt und der Tragabschnitt des Lenkerelements einstückig und mittels eines gemeinsamen Gießverfahrens hergestellt. Gießverfahren sind insbesondere aufgrund ihrer geringen Fertigungszeit und den wenigen erforderlichen Arbeitsschritten zur Herstellung des Lenkerelements bevorzugt, da auf diese Weise Zeit und Kosten reduziert werden können.

In einer alternativ bevorzugten Ausführungsform sind der Armabschnitt und der Tragabschnitt als separate Bauteile hergestellt, wobei der Armabschnitt oder der Tragabschnitt mittels Schweißen an dem Fügeabschnitt festgelegt ist. Mit anderen Worten bedeutet dies, dass der Fügeabschnitt entweder einstückig am Armabschnitt oder einstückig am Tragabschnitt ausgebildet ist, und der jeweils andere Abschnitt entsprechend an dem Fügeabschnitt angeschweißt wird. Der Vorteil dieser Ausführungsform ist, dass ein aus beispielsweise Armabschnitt und Fügeabschnitt bestehendes Halbzeug universell verwendet werden kann und verschieden große bzw. verschieden geformte Tragabschnitte an ein und demselben Verbund aus Armabschnitt und Fügeabschnitt festlegbar sind, wodurch eine vielseitige Einsetzbarkeit der im Sinne dieser Erfindung vorgesehenen Achseinheiten möglich wird. Alternativ bevorzugt kann auch der Armabschnitt unabhängig vom Fügeabschnitt und Tragabschnitt ausgebildet sein, so dass beispielsweise verschiedene Lenkerlängen, welche bevorzugt quer zur Lenkerachse gemessen werden, für ein und dieselbe Verbindung aus Fügeabschnitt und Tragabschnitt bereitgestellt werden können.

Besonders bevorzugt ist die Verbindung zwischen Achsrohr und Lenkerelement zuerst im ersten Schweißabschnitt und anschließend im zweiten Schweißabschnitt hergestellt. Durch diese bevorzugte Herstellungsreihenfolge können die im Verbindungsbereich zwischen Lenkerelement und Achsrohr auftretenden Materialspannungen aufgrund des Verzuges nach der Abkühlung der Schweißnähte minimiert werden.

Weitere Vorteile und Merkmale der Erfindung ergeben sich aus der nachfolgenden Beschreibung mit Bezug auf die beigefügten Figuren.

Es zeigen:
- Fig. 1: eine Seitenansicht einer bevorzugten Ausführungsform der erfindungsgemäßen Achseinheit,
- Fig. 2: eine Draufsicht der in Fig. 1 gezeigten Ansicht einer bevorzugten Ausführungsform der erfindungsgemäßen Achseinheit,
- Fig. 3: eine perspektivische Ansicht einer bevorzugten Ausführungsform der erfindungsgemäßen Achseinheit,
- Fig. 4: eine weitere Ansicht der in Fig. 3 gezeigten Ausführungsform der erfindungsgemäßen Achseinheit, und
- Fig. 5: eine weitere bevorzugte Ausführungsform der erfindungsgemäßen Achseinheit.

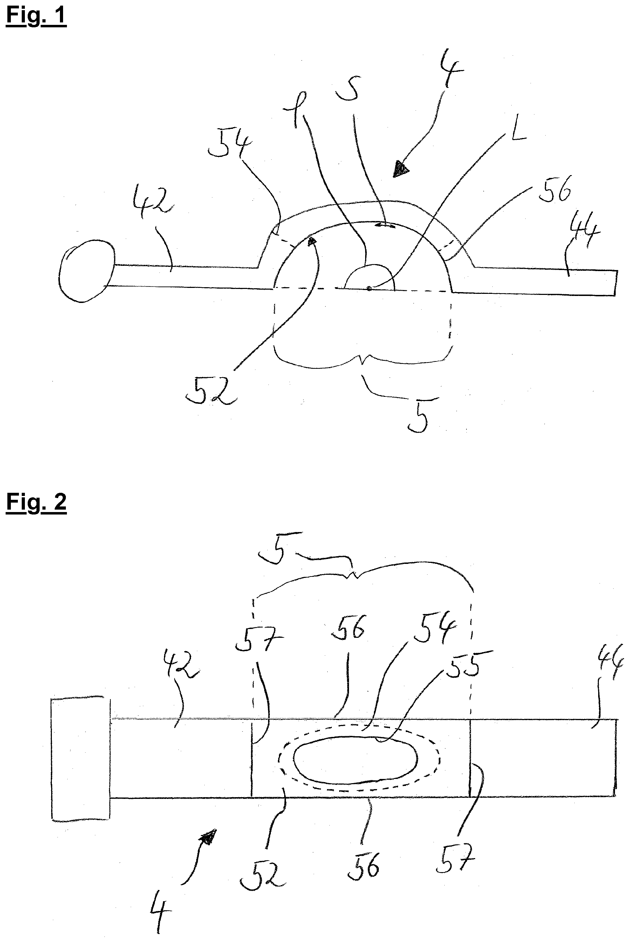

Fig. 1 zeigt eine Seitenansicht einer bevorzugten Ausführungsform des erfindungsgemäßen Lenkerelements 4, welches auf seiner linken Seite einen Armabschnitt 42, an diesen angrenzend einen Fügeabschnitt 5 und an den Fügeabschnitt wiederum angrenzend einen Tragabschnitt 44 aufweist. Links am Armabschnitt 42 ist schematisch ein Lagerauge dargestellt, an welchem das Lenkerelement schwenkbar mit dem Rahmen eine Fahrzeuges, insbesondere Nutzfahrzeuges, verbunden werden kann. Der Fügeabschnitt 5 des Lenkerelements 4 weist vorzugsweise einen ersten Schweißabschnitt 52 auf, welcher bevorzugt eine Seitennaht 56 aufweist. In der Figur nicht zu erkennen ist, dass auf der dem Betrachter abgewandten Seite des Lenkerelements 4 eine zweite Seitennaht 56 vorgesehen ist. An der Seitennaht 56 wird das Lenkerelement 4 mit einem Achsrohr 2 (nicht gezeigt) verschweißt. Bei der in Fig. 1 gezeigten Ausführungsform erstreckt sich die Seitennaht 56 dabei bezogen auf eine Lenkerachse mit einem Bogenwinkel ϕ, welcher im vorliegenden Beispiel geringfügig größer als 180° ist. Weiterhin weist die Seitennaht 56 eine Seitennahtlänge S auf. Die Lenkerachse ist dabei vorzugsweise parallel zur Betrachtungsrichtung in der Figur ausgerichtet und es ist besonders bevorzugt, dass sich der Querschnitt des Lenkerelements 4 im Bereich des Fügeabschnitts 5 im Verlauf längs der Lenkerachse L nicht oder nur geringfügig verändert. Das in Fig. 1 gezeigte Lenkerelement 4 ist insbesondere zur Verbindung mit einem zylindrisch bzw. hohlzylinderförmig ausgeführten Achsrohr 2 ausgelegt. Insbesondere bevorzugt kann das Achsrohr 2 dabei quer zur Lenkerachse L in den Fügeabschnitt 5 des Lenkerelements 4 eingefügt werden und anschließend entlang der Seitenkante 56 mit dem Lenkerelement 4 verschweißt werden. Gestrichelt dargestellt ist ein zweiter Schweißabschnitt 54 des Fügeabschnitts 5, welcher als Aussparung an der Oberseite des Lenkerelements 4 ausgebildet ist.

Fig. 2 zeigt die Unterseite der in Fig. 1 gezeigten Ausführungsform des Lenkerelements 4. Der Fügeabschnitt 5 weist dabei den ersten Schweißabschnitt 52 und den zweiten Schweißabschnitt 54 auf. Der erste Schweißabschnitt 52 weist zwei Seitennähte 56 auf und zwei Quernähte 57. Der zweite Schweißabschnitt 54 weist eine umlaufende Kante 55 auf, entlang derer eine Schweißverbindung mit dem nicht gezeigten Achsrohr 2 herstellbar ist.

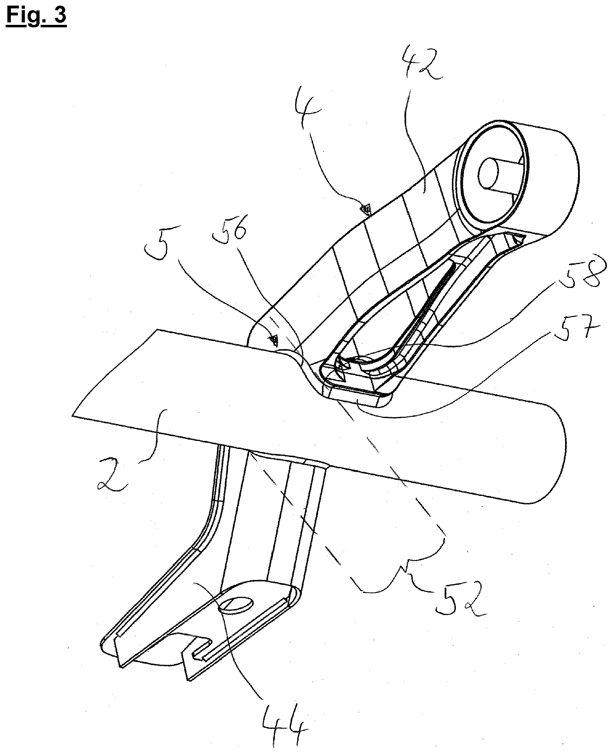

Die perspektivische Ansicht in Fig. 3 verdeutlicht den Verbindungsbereich zwischen dem Lenkerelement 4 und dem Achsrohr 2. Dabei ist der Fügeabschnitt 5 von seiner Unterseite her gezeigt, wobei insbesondere der erste Schweißabschnitt 52 erkennbar ist. Der erste Schweißabschnitt 52 weist dabei eine Seitennaht 56 und eine Quernaht 57 auf. Die Seitennaht 56 und die Quernaht 57 sind dabei in ihrem unteren Bereich über einem gerundeten Schweißnahtabschnitt 58 miteinander verbunden.

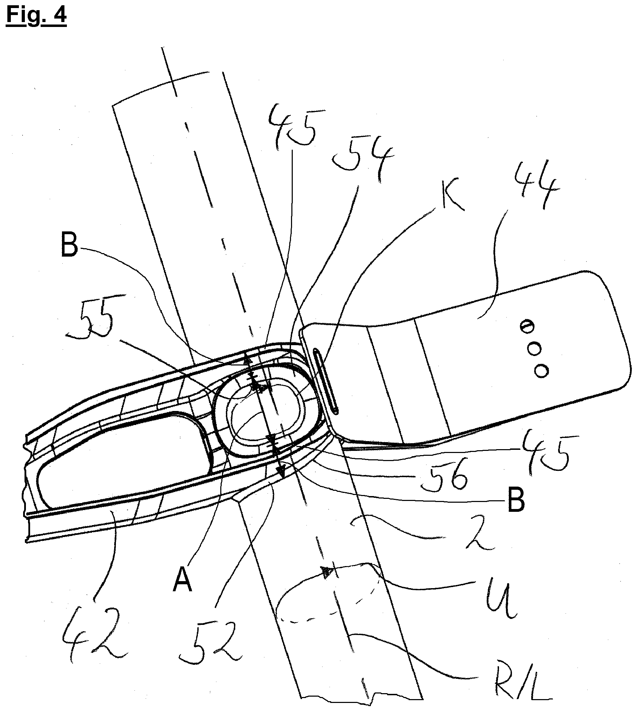

Fig. 4 zeigt eine Draufsicht auf die bereits in Fig. 3 gezeigte Ausführungsform der erfindungsgemäßen Achseinheit. Dabei ist insbesondere der zweite Schweißabschnitt 54 deutlich erkennbar, welcher über eine umlaufende Kante 55 verfügt. Die umlaufende Kante weist dabei, wie schematisch dargestellt, eine Kantenlänge K auf. Weiterhin ist der Umfang des Achsrohres 2 dargestellt, welcher vorzugsweise senkrecht zur Rohrachse R an der Außenfläche des Achsrohres 2 gemessen wird. Weiterhin zeigt Fig. 4 das bevorzugte Merkmal der Achseinheit wonach das Lenkerelement 4 im Fügeabschnitt 5 einen ersten Lenkersteg 45 und einen zweiten Lenkersteg 45 aufweist. Die Lenkerstege 45 haben dabei eine minimale Stegbreite B wobei gleichzeitig der zweite Schweißabschnitt 54 kollinear zur Erstreckungsrichtung der Stegbreite B eine Ausschnittserstreckung A aufweist welche in einem bestimmten Verhältnis zur Summe der Stegbreiten B steht. Die Stegbreite B wird dabei vorzugsweise jeweils auf der Hälfte des jeweiligen Übergangsbereiches der Lenkerstege 45 mit den benachbarten Bereichen des Lenkerelements 4 gemessen. Vorzugsweise sind die Stegbreiten B kleiner als die Ausschnitterstreckung A. Im vorliegenden Beispiel ist die Summe der beiden Stegbreiten B ungefähr das 0,6-0,8 fache der Ausschnitterstreckung A. Aus Fig. 4 wird weiterhin die bevorzugte leicht elliptische Form des zweiten Schweißabschnitts 54 sichtbar.

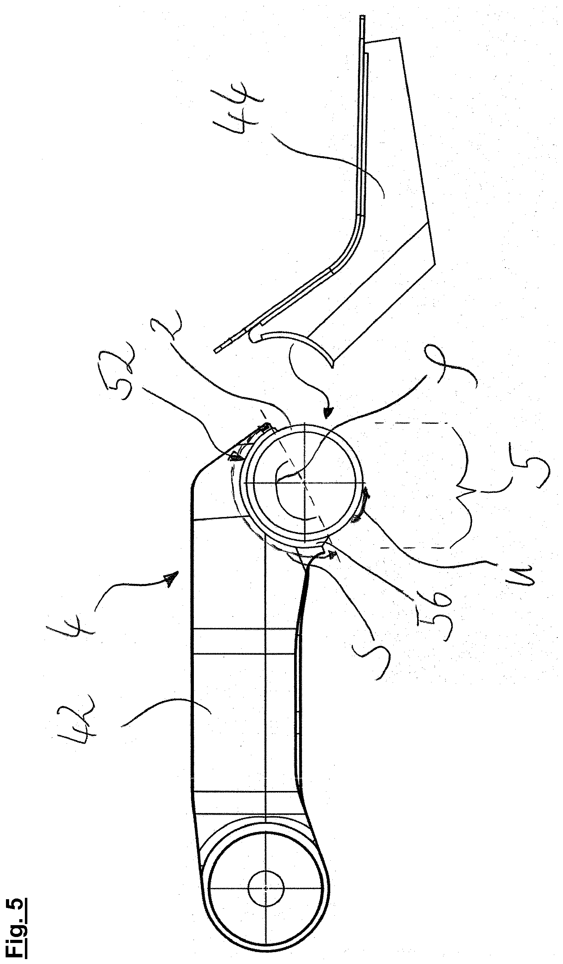

Fig. 5 zeigt eine besonders bevorzugte Ausführungsform der Achseinheit, bei der der Fügeabschnitt 5 einstückig mit dem Armabschnitt 42 ausgeführt ist und der Tragabschnitt 44 als separates Bauteil ausgeführt und am Fügeabschnitt 5 und/oder am Achsrohr 2 festlegbar ist. Der erste Schweißabschnitt 52 erstreckt sich dabei mit einem Bogenwinkel ϕ von etwas weniger als 180°, vorzugsweise 170° bis 175°. Hierdurch ist es besonders einfach möglich, das Achsrohr 2 im Fügeabschnitt 5 anzuordnen und anschließend mit einem thermischen Schweißverfahren festzulegen. Mit Vorteil kann bei dieser Ausführungsform zunächst ein Halbzeug aus Achsrohr 2, Fügeabschnitt 5 und Armabschnitt 42 erzeugt werden, wobei anschließend ein Tragabschnitt 44 an dem Halbzeug festlegbar ist. Um einen Einsatz der Lenkerelements 4 in verschiedenen Nutzfahrzeugtypen zu ermöglichen ist es bevorzugt, dass je nach Anwendungsfall ein Tragabschnitt 44 mit einer bestimmten Länge und einer bestimmten Befestigungsgeometrie für eine Luftfeder ausgewählt und an dem Verbund aus Achsrohr 2, Fügeabschnitt 5 und Armabschnitt 42 festgelegt wird.

### Bezugszeichen:

- 2: - Achsrohr
- 4: - Lenkerelement
- 42: - Armabschnitt
- 44: - Tragabschnitt
- 45: - Lenkersteg
- 5: - Fügeabschnitt
- 52: - erster Schweißabschnitt
- 54: - zweiter Schweißabschnitt
- 55: - umlaufende Kante
- 56: - Seitennaht
- 57: - Quernaht
- 58: - gerundeter Schweißnahtabschnitt
- A: - Ausschnittserstreckung
- B: - minimale Stegbreite
- K: - Kantenlänge
- L: - Lenkerachse
- ϕ: - Bogenwinkel
- R: - Rohrachse
- S: - Seitennahtlänge
- U: - Umfang

## Patentansprüche

1. Achseinheit umfassend ein Achsrohr (2) und ein Lenkerelement (4),
wobei das Achsrohr (2) sich im Wesentlichen längs einer Rohrachse (R) erstreckt,
wobei das Lenkerelement (4) einen Fügeabschnitt (5) mit einem ersten Schweißabschnitt (52) und einem zweiten Schweißabschnitt (54) aufweist, welche räumlich voneinander getrennt sind,
wobei das Lenkerelement (4) mit seinem Fügeabschnitt (5) an das Achsrohr (2) angrenzend und im Wesentlichen quer zur Rohrachse (R) angeordnet ist,
wobei im ersten Schweißabschnitt (52) und im zweiten Schweißabschnitt (54) eine Schweißverbindung zwischen dem Lenkerelement (4) und dem Achsrohr (2) herstellbar ist,
**dadurch gekennzeichnet, dass** der zweite Schweißabschnitt (54) als Aussparung an der Lenkereinheit (4) ausgebildet ist, und
wobei der zweite Schweißabschnitt (54) eine umlaufende Kante (55) aufweist, an der eine Schweißnaht herstellbar ist.

2. Achseinheit nach Anspruch 1,
wobei das Lenkerelement (4) einen Armabschnitt (42) und einen Tragabschnitt (44) aufweist,
wobei der Armabschnitt (42) und der Tragabschnitt (44) an im Wesentlichen gegenüberliegenden Seiten des Fügeabschnitts (5) an den Fügeabschnitt (5) grenzen.

3. Achseinheit nach Anspruch 1 oder 2,
wobei der erste Schweißabschnitt (52) zwei sich zumindest bereichsweise quer zu einer Lenkerachse (L) erstreckende Seitennähte (56) aufweist, und
wobei der erste Schweißabschnitt (52) zumindest eine sich im Wesentlichen parallel zur Lenkerachse (L) erstreckende Quernaht (57) aufweist.

4. Achseinheit nach Anspruch 3,
wobei die Seitennähte (56) jeweils eine Seitennahtlänge (S) aufweisen, die in einem Verhältnis von 0,2 bis 0,7, vorzugsweise 0,25 bis 0,6 und besonders bevorzugt von ca. 0,45 bis 0,5 zum Umfang (U) des Achsrohres (2) im Bereich des Fügeabschnittes (5) steht.

5. Achseinheit nach einem der Ansprüche 3 oder 4,
wobei sich die Seitennähte (56) oder der erste Schweißabschnitt (52) jeweils über einen Bogenwinkel (ϕ) bezogen auf die Lenkerachse (L) erstrecken,
wobei der Bogenwinkel (ϕ) 120° bis 195°, vorzugsweise 140° bis 185° und besonders bevorzugt ca. 170° bis 180° beträgt.

6. Achseinheit nach Anspruch 5,
wobei der Bogenwinkel (ϕ) 180° nicht übersteigt.

7. Achseinheit nach einem der Ansprüche 3 bis 6,
wobei die Seitennähte (56) und die Quernaht (57) in gerundeten Schweißnahtabschnitten (58) in einander übergehen.

8. Achseinheit nach einem der Ansprüche 3 bis 7,
wobei die Summe der Längen der Seitennähte (56) und der Quernähte (57) eine Fügelänge (F) des ersten Schweißabschnitts (52) ergibt,
wobei die Fügelänge (F) in einem Verhältnis von 1 bis 2,5, vorzugsweise 1,25 bis 2 und besonders bevorzugt von ca. 1,5 zum Umfang (U) des Achsrohres (2) im Bereich des Fügeabschnittes (5) steht.

9. Achseinheit nach einem der vorhergehenden Ansprüche,
wobei die umlaufende Kante (55) eine Kantenlänge (K) aufweist, welche in einem Verhältnis von 0,4 bis 1,3, vorzugsweise 0,6 bis 1 und besonders bevorzugt von ca. 0,85 bis 0,95 zum Umfang (U) des Achsrohres (2) im Bereich des Fügeabschnittes (5) steht.

10. Achseinheit nach einem der vorhergehenden Ansprüche,
wobei der zweite Schweißabschnitt (54) derart am Lenkerelement (4) vorgesehen ist, dass angrenzend an den zweiten Schweißabschnitt (54) und einander gegenüberliegend zwei Lenkerstege (45) gebildet sind,
wobei die Lenkerstege (45) eine minimale Stegbreite (B) aufweisen, wobei der zweite Schweißabschnitt (54) kollinear zu den minimalen Stegbreiten (B) eine Ausschnittserstreckung (A) aufweist,
wobei die Summe der minimalen Stegbreiten (B) zu der Ausschnittserstreckung (A) in einem Verhältnis von 0,1 bis 1, vorzugsweise 0,2 bis 0,8 und besonders bevorzugt von ca. 0,3 bis 0,4 steht.

11. Achseinheit nach einem der vorhergehenden Ansprüche,
wobei das das Lenkerelement (4) zumindest teilweise als einstückiges Gussteil ausgebildet ist.

12. Achseinheit nach einem der Ansprüche 2 bis 11,
wobei der Armabschnitt (42) und Tragabschnitt (44) als separate Bauteile hergestellt sind,
wobei der Armabschnitt (42) einstückig mit dem Fügeabschnitt (5) ausgebildet.

13. Achseinheit nach einem der vorhergehenden Ansprüche,
wobei die Verbindung zwischen Achsrohr (2) und Lenkerelement (4) zuerst im ersten Schweißabschnitt (52) und anschließend im zweiten Schweißabschnitt (54) hergestellt ist.

## Claims

1. An axle unit comprising an axle tube (2) and a link element (4),
wherein the axle tube (2) substantially extends along a tube axis (R),
wherein the link element (4) has a joining portion (5) with a first welding portion (52) and a second welding portion (54),
wherein the link element (4) is arranged with its joining portion (5) adjacent to the axle tube (2) and substantially transversely with respect to the tube axis (R),
wherein, in the first welding portion (52) and in the second welding portion (54), a welded joint can be produced between the link element (4) and the axle tube (2) chracterised by,
the second welding portion (54) is designed as a recess on the link unit (4), and
wherein the second welding portion (54) has an encircling edge (55) on which a weld seam can be produced.

2. The axle unit as claimed in claim 1, wherein the link element (4) has an arm portion (42) and a supporting portion (44),
wherein the arm portion (42) and the supporting portion (44) are adjacent to the joining portion (5) on substantially opposite sides of the joining portion (5).

3. The axle unit as claimed in claim 1 or 2, wherein the first welding portion (52) has two side seams (56) extending at least in regions transversely with respect to a link axis (L), and
wherein the first welding portion (52) has at least one transverse seam (57) extending substantially parallel to the link axis (L).

4. The axle unit as claimed in claim 3, wherein the side seams (56) each have a side seam length (S) which is in a ratio of 0.2 to 0.7, preferably 0.25 to 0.6 and particularly preferably of approx. 0.45 to 0.5 to the circumference (U) of the axle tube (2) in the region of the joining portion (5).

5. The axle unit as claimed in either of claims 3 and 4, wherein the side seams (56) or the first welding portion (52) each extend over an arc angle (ϕ) with respect to the link axis (L), wherein the arc angle (ϕ) is 120° to 195°, preferably 140° to 185° and particularly preferably approx. 170° to 180°.

6. The axle unit as claimed in claim 5, wherein the arc angle (ϕ) does not exceed 180°.

7. The axle unit as claimed in one of claims 3 to 6,
wherein the side seams (56) and the transverse seam (57) merge into one another in rounded weld seam portions (58) .

8. The axle unit as claimed in one of claims 3 to 7,
wherein the sum of the lengths of the side seams (56) and of the transverse seams (57) results in a joining length (F) of the first welding portion (52), wherein the joining length (F) is in a ratio of 1 to 2.5, preferably of 1.25 to 2 and particularly preferably of approx. 1.5 to the circumference (U) of the axle tube (2) in the region of the joining portion (5).

9. The axle unit as claimed in one of the preceeding claims, wherein the encircling edge (55) has an edge length (K) which is in a ratio of 0.4 to 1.3, preferably 0.6 to 1 and particularly preferably of approx. 0.85 to 0.95 to the circumference (U) of the axle tube (2) in the region of the joining portion (5).

10. The axle unit as claimed in one of the preceding claims, wherein the second welding portion (54) is provided on the link element (4) in such a manner that two link webs (45) are formed adjacent to the second welding portion (54) and opposite each other, wherein the link webs (45) have a minimum web width (B), wherein the second welding portion (54) has a section extent (A) collinearly to the minimum web widths (B), wherein the sum of the minimum web widths (B) to the section extent (A) is in a ratio of 0.1 to 1, preferably 0.2 to 0.8 and particularly preferably of approx. 0.3 to 0.4.

11. The axle unit as claimed in one of the preceding claims, wherein the link element (4) is at least partially designed as an integral cast part.

12. The axle unit as claimed in one of claims 2 to 12,
wherein the arm portion (42) and supporting portion (44) are produced as separate components, wherein the arm portion (42) is formed integrally with the joining portion (5).

13. The axle unit as claimed in one of the preceding claims, wherein the connection between axle tube (2) and link element (4) is first of all produced in the first welding portion (52) and subsequently in the second welding portion (54

## Revendications

1. Unité d'essieu incluant un tube d'essieu (2) et un élément de direction (4), dans laquelle le tube d'essieu (2) s'étend sensiblement le long d'un axe (R) du tube,
dans laquelle l'élément de direction (4) comprend une portion d'assemblage (5) avec une première portion soudée (52) et une seconde portion soudée (54), qui sont séparées dans l'espace l'une de l'autre,
dans laquelle l'élément de direction (4) est agencé avec sa portion d'assemblage (5) adjacente au tube d'essieu (3) est sensiblement perpendiculairement à l'axe (R) du tube,
dans laquelle une liaison soudée peut être établie entre l'élément de direction (4) et le tube d'essieu (2) dans la première portion soudée (52) et dans la seconde portion soudée (54),
**caractérisée en ce que** la seconde portion soudée (54) est réalisée sur l'unité de direction (4) sous forme d'échancrure, et
dans laquelle la seconde portion soudée (54) comporte une arête périphérique (55) au niveau de laquelle un cordon de soudure peut être réalisé.

2. Unité d'essieu selon la revendication 1,
dans laquelle l'élément de direction (4) comprend une portion de bras (42) et une portion porteuse (44),
dans lequel la portion de bras (42) et la portion porteuse (44) sont adjacentes à la portion d'assemblage (5) sur les côtés sensiblement opposés de la portion d'assemblage (5).

3. Unité d'essieu selon la revendication 1 ou 2,
dans laquelle la première portion soudée (52) comprend deux cordons latéraux (56) qui s'étendent au moins localement perpendiculairement à un axe (L) de l'élément de direction, et dans laquelle la première portion soudée (52) comprend au moins un cordon transversal (57) qui s'étend sensiblement parallèlement à l'axe (L) de l'élément de direction.

4. Unité d'essieu selon la revendication 3,
dans laquelle les cordons latéraux (56) ont chacun une longueur (S) qui est dans une relation de 0,2 à 0,7, de façon préférée de 0,25 à 0,6, et de manière particulièrement préférée d'environ 0,45 à 0,5 fois le périmètre (U) du tube d'essieu (2) dans la région de la portion d'assemblage (5).

5. Unité d'essieu selon l'une des revendications 3 ou 4,
dans laquelle les cordons latéraux (56) ou la première portion soudée (52) s'étendent respectivement sur un angle d'arc (ϕ), par référence à l'axe (L) de l'élément de direction, l'angle d'arc (ϕ) s'élevant de 120° à 195°, de préférence de 140° à 185°, et de façon particulièrement préférée d'environ 170° à 180°.

6. Unité d'essieu selon la revendication 5,
dans laquelle l'angle d'arc (ϕ) ne dépasse pas 180°.

7. Unité d'essieu selon l'une des revendications 3 à 6,
dans laquelle les cordons latéraux (56) et le cordon transversal (57) se transforment dans des tronçons de cordon de soudure (58) arrondis.

8. Unité d'essieu selon l'une des revendications 3 7,
dans laquelle la somme des longueurs des cordons latéraux (56) et des cordons transversaux (57) donne en résultat une longueur d'assemblage (F) de la première portion soudée (52),
ladite longueur d'assemblage (F) étant dans un rapport de 1 à 2,5, de préférence 1,25 à 2, et de manière particulièrement préférée d'environ 1,5 par rapport au périmètre (U) du tube d'essieu (2) dans la région de la portion d'assemblage (5).

9. Unité d'essieu selon l'une des revendications précédentes,
dans laquelle l'arête périphérique (55) présente une longueur d'arête (K) qui est dans un rapport de 0,4 à 1,3, de préférence de 0,6 à 1, et de manière particulièrement préférée d'environ 0,85 à 0,95 par rapport au périmètre (U) du tube d'essieu (2) dans la région de la portion d'assemblage (5).

10. Unité d'essieu selon l'une des revendications précédentes,
dans laquelle la seconde portion soudée (54) est prévue sur l'élément de direction (4) de telle façon qu'il se forme deux barrettes de direction (45) adjacentes à la seconde portion soudée (54) et opposées l'une à l'autre,
dans laquelle les barrettes de direction (45) présentent une largeur de barrette minimale (B),
dans laquelle la seconde portion soudée (54) présente, de façon colinéaire aux largeurs de barrette minimales (B) une extension échancrée (A),
dans laquelle la somme des largeurs de barrette minimales (B) est dans un rapport de 0,1 à 1, de préférence de 0,2 à 0,8 et de façon particulièrement préférée d'environ 0,3 à 0,4 par rapport à l'extension échancrée (A).

11. Unité d'essieu selon l'une des revendications précédentes,
dans laquelle l'élément de direction (4) est réalisé au moins partiellement sous forme de pièce de fonderie d'un seul tenant.

12. Unité d'essieu selon l'une des revendications 2 à 11,
dans laquelle la portion de bras (42) et la portion porteuse (44) sont réalisées sous forme d'éléments constitutifs séparés,
dans laquelle la portion de bras (42) est réalisée d'un seul tenant avec la portion d'assemblage (5).

13. Unité d'essieu selon l'une des revendications précédentes,
dans laquelle la liaison entre le tube d'essieu (2) et l'élément de direction (4) est établie tout d'abord dans la première portion soudée (52) et ensuite dans la seconde portion soudée (54).
